# FASCICULE DE BREVET EUROPEEN

(11) **EP 0 587 685 B1**
(45) Date de publication et mention de la délivrance du brevet: **11.01.1995**
(21) Numéro de dépôt: 92911726.5
(22) Date de dépôt: 04.06.1992
(51) Int. Cl.: H02K 21/18, H02K 37/16

(54) **MOTEUR PAS-A-PAS OU SYNCHRONE ECONOMIQUE**
SCHNITT-ODER SYNCHRONSPARMOTOR
LOW-COST STEPPING OR SYNCHRONOUS MOTOR

(30) Priorité: 06.06.1991 FR 9106845
(43) Date de publication de la demande: 23.03.1994
(73) Titulaire: MOVING MAGNET TECHNOLOGIES S.A., 25000 Besançon (FR)
(72) Inventeur: OUDET, Claude, F-25000 Besançon (FR); PRUDHAM, Daniel, F-25220 Thise (FR)
(74) Mandataire: Pernez, Helga
(86) Numéro de dépôt international: FR9200496
(87) Numéro de publication internationale: WO9222122

(56) Documents cités:
- FR-A- 1 457 327
- US-A- 1 836 513
- US-A- 3 864 588

## Description

La présente invention concerne un moteur diphasé de type pas-à-pas ou synchrone, comportant un rotor à aimants permanents minces présentant des pôles alternés. Le moteur de ce type comporte par ailleurs plusieurs pôles statoriques qui doivent être excités indépendamment par au moins deux sources de courant en relation de phase l'une par rapport à l'autre de façon à provoquer la rotation du rotor dans un sens ou dans l'autre. De tels moteurs sont employés dans de nombreux domaines, en particulier dans les équipements de bureau tels que les imprimantes, télécopieurs, les photocopieuses ou des appareils ménagers. Dans de nombreux autres domaines, un nombre croissant d'équipements font appel à la motorisation. Ainsi, les commandes motorisées dans une automobile se multiplient: commande des sièges, des volets de réglage de chauffage, de l'orientation des phares. De ce fait, on constate des exigences croissantes en matière de réduction des coûts de fabrication de tels moteurs diphasé pas-à-pas ou synchrone. Par ailleurs, les moteurs connus dans l'art antérieur constituent généralement des composants à part entière, qui coopèrent avec des équipements conçus indépendamment par des organes de liaison et d'accouplement.

En particulier, pour une application de régulation automatique de la climatisation d'une voiture, on utilise dans l'art antérieur un asservissement de position mettant en oeuvre un moteur à courant continu à collecteur qui commande le volet d'air à travers un train d'engrenages réducteur de vitesse. Pour permettre une commande numérique, le moteur à courant continu est remplacé par un moteur pas-à-pas. Ce remplacement implique par ailleurs le remplacement des organes d'accouplement et nécessite souvent une conception complète des commandes des volets. Le nouveau moteur est généralement acquis auprès d'un sous-traitant livrant un ensemble standard assemblé et testé intégrant outre le rotor et le stator des paliers et un boîtier et dont l'encombrement n'est pas toujours adapté au mécanisme à commander.

L'objet de la présente invention est un moteur synchrone ou pas-à-pas susceptible d'être intégré avec le reste du mécanisme qu'il commande. Le moteur selon l'invention peut en conséquence être livré en pièces séparées, intégrables entre deux platines supportant par ailleurs le train d'engrenage commandant par exemple un volet de climatisation. Ce type d'assemblage est facilité par le fait que le moteur selon l'invention est du type à un seul étage. Le prix de revient du moteur selon l'invention est minimisé du fait de la définition des composants dont la fabrication est économiquement avantageuse, et d'une conception optimale de la configuration des différentes parties du rotor et du stator, ainsi que de leur assemblage. En particulier, la masse de fer et de cuivre mise en jeu dans le moteur selon l'invention est plus faible que dans le cas des solutions concurrentes présentant un couple et un nombre de pas par tour identiques.

Le moteur selon l'invention comporte une première partie statorique coopérant avec au moins deux bobines électriques, une deuxième partie statorique assurant la fermeture au moins partielle des flux magnétiques et un rotor comportant 2N aimants minces aimantés transversalement en sens alternés de façon à présenter sur chacune de ses surfaces des pôles magnétiques alternativement positifs et négatifs. Le rotor comporte sur chacune de ses surfaces cinq paires de pôles et la première partie statorique est constituée de deux pièces statoriques identiques de haute perméabilité magnétique présentant chacune deux pôles statoriques réunis par une partie médiane entourée d'une bobine d'une longueur sensiblement égale à la largeur de l'ouverture de la pièce statorique.

L'axe des bobines est disposé sensiblement dans le plan moyen de l'aimant et des pièces statoriques en matériau doux perpendiculaire à l'axe de rotation. Chaque pièce statorique bobinée, avec la zone de la deuxième partie statorique fermant le flux, constitue une phase du stator du moteur diphasé. Les lignes médianes des deux pôles sont écartées d'environ 1,5 pas. La deuxième partie statorique est constituée en un matériau de haute perméabilité magnétique présentant quatre zones correspondant respectivement aux quatres pôles statoriques, lesdites quatres zones étant reliées deux à deux de façon à assurer la fermeture du flux magnétique de chacune des pièces statoriques. Le choix de cinq paires de pôles est particulièrement avantageux, car il constitue le nombre minimum de pôles compatibles avec une structure plane diphasée à un seul étage dont chaque élément de la structure statorique est réalisable en une pièce unique ou feuilletée par découpe dans une feuille d'un matériau perméable magnétiquement doux et permettant par ailleurs le bobinage à spires rangées.

En effet, dans le cas d'une structure comportant un nombre de pôles supérieurs, par exemple six, soit, pour un moteur comportant des pôles de largeur constante, une paire de pôles serait inutilisée et conduirait donc à un rotor plus cher et présentant un plus grand moment d'inertie, soit, pour un moteur dont le diamètre de rotor est constant, le couple serait réduit.

Le moteur selon l'invention est du fait de sa structure particulièrement adapté aux aimants modernes puissants et économiques du type néodyme-fer moulés par compression ou injection.

L'invention concerne selon une première variante un moteur diphasé pas-à-pas ou synchrone dont le rotor est constitué par un disque aimanté transversalement et présente dix zones aimantées alternativement positivement et négativement. Lesdites zones présentent la forme de secteurs angulaires de 36 degrés aimantés perpendiculairement à la surface du disque, en sens alterné. Ce mode de réalisation est avantageux dans le cas où l'encombrement en hauteur doit être réduit au minimum.

L'invention concerne selon une variante préférée un moteur diphasé pas-à-pas ou synchrone dont le rotor est constitué par un aimant annulaire aimanté radialement et présente dix zones aimantées alternativement positivement et négativement. Ces zones présentent chacune la forme d'une tuile dont l'ouverture angulaire est d'environ 36 degrés. Ce mode de réalisation est préféré car il permet de réduire plus facilement les efforts parasites axiaux et radiaux sur l'axe du rotor, dûs aux actions magnétiques imparfaitement équilibrées par suite des tolérances de fabrication.

De préférence, l'ouverture angulaire des médiatrices des deux pôles de chacune de pièces polaires est légèrement supérieure à 108 °. Ce mode de réalisation permet de réduire le couple résiduel à 20 périodes par tour en l'absence de courant et accessoirement d'augmenter la longueur de l'enroulement susceptible d'être bobiné de manière simple.

Selon un mode de réalisation particulier, les parties statoriques sont constituées par un empilage de feuilles magnétiques découpées, de préférence en fersilicium d'une épaisseur de l'ordre de 0,5 millimètres. Ce mode de réalisation permet de réaliser des structures statoriques non limitées en épaisseur.

Selon une variante de réalisation des enroulements, les bobines sont constituées par un fil électrique bobiné directement sur la partie médiane de la pièce statorique. Bien que la première couche de spires soit dans ce cas en court circuit, cette solution présente des avantages résultant de l'absence de carcasse ou de couche isolante, ce qui simplifie le procédé de fabrication et réduit les coûts.

Selon une autre variante, les enroulements sont bobinées autour de carcasses isolantes entourant la partie médiane de chacune des pièces statoriques, ladite carcasse étant constituée soit d'une pièce unique moulée et fendue, soit de plusieurs parties complémentaires formant un manchon isolant lorsqu'elles sont assemblées.

Avantageusement, le rotor est constitué par un manchon tubulaire coaxial avec l'axe de rotation, muni de zones de liaison avec l'axe de rotation, ledit manchon tubulaire supportant l'aimant tubulaire sur une partie au moins de sa hauteur.

Les pièces statoriques sont positionnées et fixées sur une platine-support comportant des logements complémentaires et des goupilles aptes à recevoir et à maintenir en place lesdites pièces statoriques. cette platine peut être constituée par un circuit imprimé.

Selon une autre variante préférée, la deuxième partie statorique est fixe et dentée. Ce mode de réalisation permet d'une part de réduire l'inertie àu rotor et d'autre part d'augmenter le couple par suite de l'existence d'une denture de chaque côté de l'aimant mince. Ces caractéristiques sont avantageuses pour les applications dans lesquelles des accélérations élevées sont recherchées. De plus, on s'affranchit ainsi de manque de compatibilité entre les coefficients de dilatation respectifs d'une pièce en fer et d'un aimant moulé.

Quelque soit le mode de réalisation susmentionné -rotor en forme de disque ou de cylindre-, une première variante de l'invention consiste en ce que la deuxième partie statorique est solidaire du rotor. Ce mode de réalisation permet de réaliser un rotor présentant une grande rigidité et donc une résistance mécanique importante, caractéristique avantageuse pour la réalisation d'un moteur diphasé pas-à-pas ou synchrone de grande fiabilité.

La présente invention sera mieux comprise à la lecture de la description qui suit, faisant référence aux dessins annexés où:
- la figure 1 représente une vue en coupe transversale ;
- la figure 2 représente une vue en coupe selon BCDEF.

Le moteur pas-à-pas selon l'exemple décrit comporte une structure statorique et un rotor. La structure statorique comporte une première partie statorique formée de deux pièces statoriques (1,2), chacune étant couplée magnétiquement à une bobine respectivement (3,4), et par une deuxième partie statorique (5) disposée à l'intérieur du rotor (6) de forme tubulaire.

La partie magnétique dure du rotor présente dix parties (7 à 16) en forme de tuiles aimantées radialement, en sens alternés de façon à présenter alternativement un pôle SUD sur la surface intérieure et un pôle SUD sur la surface extérieure du rotor. Chacune des parties aimantées occupe un secteur angulaire de 36 °. L'aimant cylindrique peut être réalisé par association de parties aimantées indépendantes, ou par aimantation des différentes zones d'un anneau réalisé de préférence par moulage, par compression ou injection dans un alliage à champ coercitif élevé de néodyme-fer plastique présentant une caractéristique B(H) sensiblement linéaire dans le deuxième quadrant, par exemple les aimants commercialisé sous la dénomination "NP8L" par la société DAIDO STEEL CORPORATION fabriqué à partir de poudre commercialisée par la société GENERAL MOTORS sous la dénomination de "MQI". On peut également mettre en oeuvre un matériau à orientation radiale tel que celui commercialisé sous la dénomination de "SAMLET 9R" par la société EPSON.

Les deux pièces statoriques (1,2) constituant la première partie statorique sont symétriques par rapport à un plan médian (17) du moteur contenant l'axe de rotation (18) du rotor. Chacune des pièces statoriques (1,2) est symétrique par rapport à un plan respectivement (29) et (30) formant entre eux un angle de 162 °, soit de 81 ° par rapport au plan de symétrie (17) du moteur. Les pièces statoriques (1, 2) présentent chacune deux pôles statoriques respectivement (19,20) et (21,22) réunis par une partie médiane respectivement (23) et (24). La largeur d'un pôle statorique est sensiblement inférieure à la largeur d'une zone aimantée (7 à 16) et est pratiquement voisine de 28 °. Elle présente une surface concave d'un rayon légèrement supérieur au rayon extérieur du rotor. La hauteur de chacun des pôles statoriques (19 à 22) est égale à la hauteur de la partie aimantée du rotor (6). L'écart angulaire entre les axes de symétrie (25,26) et (27,28) des pôles statoriques respectivement (19, 20) et (21, 22) est de 108 ° + β, où β est un angle nul si on ne recherche pas de compensation des couples magnétostatiques (en l'absence de courant), ou sensiblement égal à 9 ° si on cherche à compenser l'harmonique 4 à 20 périodes par tour. L'harmonique 2 à 10 périodes par tour est automatiquement compensée par l'existence de deux phases en quadrature électrique.

Les pièces statoriques (1,2) conformes à l'exemple décrit sont réalisées par frittage d'un matériau magnétique doux. Les parties médianes (23, 24) sont de section rectangulaire et se poursuivent de part et d'autres par des portions courbes (31 à 34) dont les extrémités constituent les pôles statoriques (19 à 22). La réalisation monolithique de chacune des pièces statorique (1), (2) est particulièrement avantageuse car elle permet d'éviter tout joint magnétique dans le sens de passage du flux.

Chacune des pièces statoriques (1,2) supporte et est couplée magnétiquement à un enroulement respectivement (3) et (4). Ces enroulements sont bobinés directement sur les pièces statoriques afin de réduire le nombre de constituant du moteur et de simplifier le procédé de fabrication. Il peut en résulter un court circuit de la première série de spires qui doit être compensé par une augmentation du nombre de tours.

Toutefois, si l'on cherche à éviter cet inconvénient, on peut réaliser un manchon isolant constitué de deux parties complémentaires propres à s'emboîter autour des parties médianes (23, 24) des pièces statoriques. Leur mise en place est aisée, et elle évite le court circuit des premières spires. Les manchons peuvent éventuellement supporter les cosses de connexion de l'enroulement.

La longueur des enroulements (3, 4) est limitée à l'ouverture des pièces statoriques (1,2), qui correspond à la distance entre les bords intérieurs (35, 36) ou (37,38) d'une même pièce statorique respectivement (1) ou (2).

La deuxième partie statorique (5) est coaxiale avec le rotor (6). Elle est également réalisée par en matériau doux fritté ou par empilement de tôles découpées. Le stator feuilleté est avantageux lorsque des vitesses de rotation élevées (par exemple plus de 200 pas par seconde en fonctionnement pas-à-pas, soit 10 tours par secondes et un courant de 50 hertz dans les bobines), et un bon rendement de conversion d'énergie sont recherchées. Une autre solution consiste à fritter des stators en fer-nickel ou en fersilicium au lieu de fer pur, de façon à profiter de la plus grande résistivité de ces matériaux.

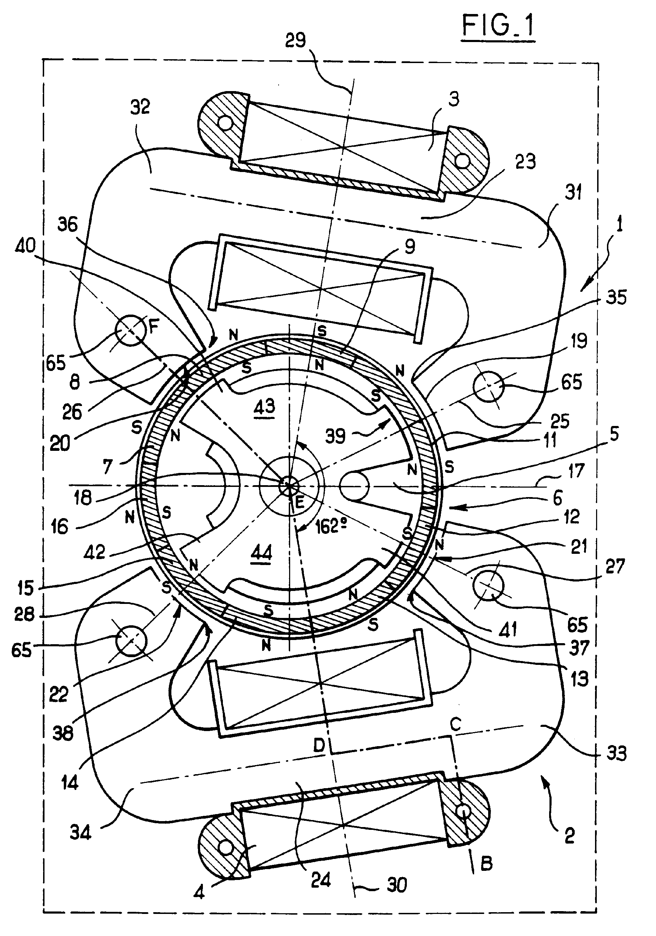

Dans l'exemple décrit, la deuxième partie statorique (5) est fixe, l'axe de rotation du rotor la traversant. Elle présente quatre zones polaires (39 à 42) correspondant respectivement aux pôles statoriques (25 à 28). Le flux magnétique se referme sur les zones polaires qui sont en concordance à travers les parties massives (43) et (44) reliant respectivement la zone polaire (39) à la zone polaire (40) et la zone polaire (41) à la zone polaire (42). La forme de cette deuxième partie statorique (5) peut varier dans de large proportion: il est possible de mettre en oeuvre une pièce pleine, ou des pièces indépendantes en forme de croissant, ou encore de forme tubulaire. Il est cependant préférable de réduire les sections de passage du flux de fuite entre les dents (39) et (41) d'une part et (40) et (42) d'autre part, comme indiqué en figure 1.

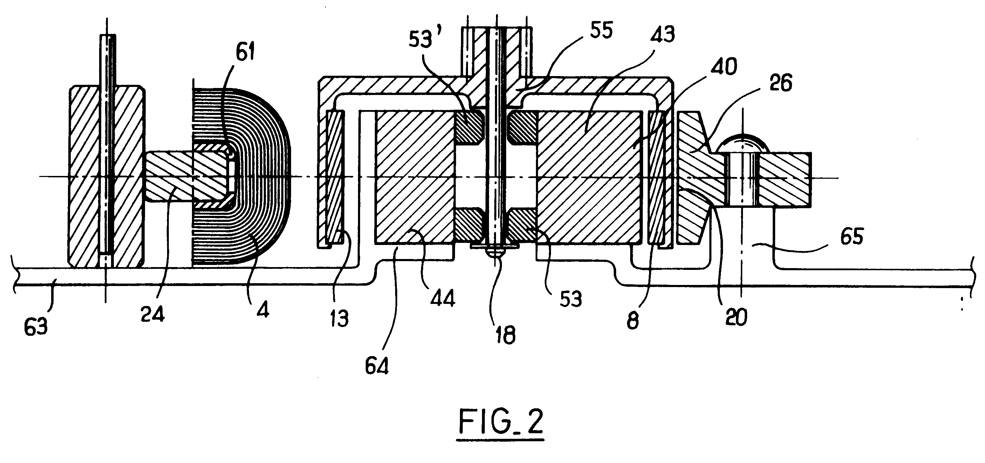

La figure 2 représente une vue en coupe selon BCDE du moteur représenté en figure 1. Les différentes pièces constituant le moteur selon l'invention peuvent être intégrées dans tout mécanisme ou dispositif existant et peuvent être livrées indépendamment de tout boîtier.

Le rotor (6) comporte un aimant annulaire dont on voit sur la figure 2 les parties aimantées (8 et 13). L'axe (18) du rotor (6) supporte un manchon (55) réalisé en un matériau non-magnétique, par exemple en matière plastique. L'aimant est collé sur ce manchon (55) qui lui sert de support et de liaison avec l'axe (18). Des paliers (53, 53') assurent le positionnement de l'axe (18) par rapport à la structure statorique intérieure fixe (5).

Les différents composants du moteur sont fixés sur une platine (63) réalisée par exemple en matière plastique. Cette platine (63) peut être constituée par une partie du dispositif à motoriser. Elle présente un logement (64) pour le maintien de la partie statorique intérieure (5) et des tétons (65) pour la fixation des deux parties statoriques (1) et (2).

Le rotor peut également être constitué par un disque aimanté, les quatres pôles statoriques de la première partie statorique et les quatres pôles statoriques de la deuxième partie statorique étant dans ce cas disposés selon deux plans perpendiculaires à l'axe de rotation.

## Revendications

1. Moteur diphasé pas-à-pas ou synchrone du type comportant une première partie statorique coopérant avec deux bobines électriques, une deuxième partie statorique (5) assurant la fermeture des flux magnétiques et un rotor (6) comportant 2N aimants minces aimantés transversalement en sens alternés de façon à présenter sur chacune de ses surfaces des pôles magnétiques alternativement positifs et négatifs, caractérisé en ce que le rotor (6) comporte cinq paires de pôles et en ce que la première partie statorique est constituée de deux pièces statoriques (1, 2) identiques réalisées en un matériau magnétiquement doux et présentant chacune deux pôles statoriques (19, 20) et (21, 22) réunis par une partie médiane (23, 24) entourée d'une bobine (3, 4) d'une longueur sensiblement égale à la largeur de l'ouverture de la pièce statorique (1, 2), les lignes médianes (25 à 28) desdits pôles statoriques (19 à 22) étant écartées d'environ 108 °, la deuxième partie statorique (5) étant constituée en un matériau magnétiquement doux assurant la fermeture du flux magnétique.

2. Moteur diphasé pas-à-pas ou synchrone selon la revendication 1, caractérisé en ce que le rotor (6) est constitué par un aimant annulaire aimanté radialement présentant dix zones aimantées adjacentes (7 à 13) en forme de tuiles.

3. Moteur diphasé pas-à-pas ou synchrone selon la revendication 1 ou 2 caractérisé en ce que la deuxième partie statorique (5) est solidaire du rotor (6).

4. Moteur diphasé pas-à-pas ou synchrone selon la revendication 1 ou 2 caractérisé en ce que la deuxième partie statorique (5) est fixe et présente quatre zones (39 à 42) correspondant respectivement aux quatres pôles statoriques (19 à 22), lesdites quatres zones (39 à 42) étant reliées deux à deux de façon à assurer la fermeture du flux magnétiques de chacune des pièces statoriques (1, 2).

5. Moteur diphasé pas-à-pas ou synchrone selon l'une quelconque des revendications 1 à 4 caractérisé en ce que l'ouverture angulaire des médianes (25 à 28) des deux pôles (19 à 22) de chacune des pièces statoriques (1,2) est légèrement supérieure à 108 °.

6. Moteur diphasé pas-à-pas ou synchrone selon les revendications 1 à 5 caractérisé en ce que les parties statoriques (1,2) sont constituées par un empilage de tôles magnétiques découpées.

7. Moteur diphasé pas-à-pas ou synchrone selon les revendications 1 à 5 caractérisé en ce que les parties statoriques (1,2) sont constituées par matériau magnétique doux fritté.

8. Moteur diphasé pas-à-pas ou synchrone selon la revendication 1 à 7, caractérisé en ce que les enroulements (3,4) sont constitués par un fil électrique bobiné directement sur la partie médiane de la pièce statorique.

9. Moteur diphasé pas-à-pas ou synchrone selon les revendications 1 à 7, caractérisé en ce que les enroulements (3,4) sont bobinées sur des carcasses isolantes entourant la partie médiane (23, 24) de chacune des pièces statoriques (1,2), lesdites carcasses étant constituées de plusieurs parties complémentaires formant un manchon isolant lorsqu'elles sont assemblées.

10. Moteur diphasé pas-à-pas ou synchrone selon les revendications 1 à 9, caractérisé en ce que le rotor est constitué par un manchon tubulaire coaxial avec l'axe de rotation, muni de zones de liaison avec l'axe de rotation (18), ledit manchon tubulaire supportant l'aimant tubulaire (7 à 13) sur une partie au moins de sa hauteur.

## Patentansprüche

1. Zweiphasen-Motor, nämlich Schrittmotor oder Synchronmotor, mit einem ersten Statorteil, welches mit zwei elektrischen Spulen zusammenwirkt, einem zweiten Statorteil (5), welches den Schluß des magnetischen Flusses gewährleistet, und einem Rotor (6), welcher 2N dünne, quer magnetisierte und in der Weise alternierend angeordnete Magneten umfaßt, daß auf jeder seiner Flächen abwechselnd positive und negative magnetische Pole vorhanden sind,
dadurch gekennzeichnet,
daß der Rotor (6) fünf Polpaare aufweist und daß das erste Statorteil aus zwei identischen Statorstücken (1, 2) aus magnetisch weichem Material besteht, die je zwei Statorpole (19, 20) und (21, 22) aufweisen, welche durch ein Mittelteil (23, 24) verbunden sind, wobei das Mittelteil von einer Wicklung (3, 4) umgeben ist, welche im wesentlichen eine der Breite der Öffnung des Statorteilstücks (1, 2) entsprechenden Länge aufweist, wobei die Mittellinien (25 bis 28) der genannten Statorpole (19 bis 22) einen Winkel von ca. 108° bilden und das zweite Statorteil (5) aus einem magnetisch weichen Material besteht, welches den Schluß des magnetischen Flusses gewährleistet.

2. Zweiphasenmotor als Schritt- oder Synchronmotor gemäß Anspruch 1,
dadurch gekennzeichnet,
daß der Rotor (6) aus einem radial magnetisierten Ringmagnet besteht, welcher zehn benachbarte magnetisierte, ziegelförmige Zonen (7 bis 13) aufweist.

3. Zweiphasenmotor als Schritt- oder Synchronmotor gemäß Anspruch 1 oder 2,
dadurch gekennzeichnet,
daß das zweite Statorteil (5) mit dem Rotor (6) zusammenwirkt.

4. Zweiphasenmotor als Schritt- oder Synchronmotor gemäß Anspruch 1 oder 2,
dadurch gekennzeichnet,
daß das zweite Statorteil (5) fest ist und vier Zonen (39 bis 42) aufweist, welche jeweils den vier Statorpolen (19 bis 22) entsprechen, wobei die genannten vier Zonen (39 bis 42) paarweise verbunden sind, um den Schluß des magnetischen Flusses jedes Statorteiles (1, 2) zu gewährleisten.

5. Zweiphasenmotor als Schritt- oder Synchronmotor gemäß einem der Ansprüche 1 bis 4,
dadurch gekennzeichnet,
daß die Winkelöffnung der Mittellinien (25 bis 28) der beiden Pole (19 bis 22) jedes Statorteiles (1, 2) etwas größer als 108° ist.

6. Zweiphasenmotor als Schritt- oder Synchronmotor gemäß einem der Ansprüche 1 bis 5,
dadurch gekennzeichnet,
daß die Statorteile (1, 2) aus einer Schichtung von zugeschnittenen magnetischen Blechen bestehen.

7. Zweiphasenmotor als Schritt- oder Synchronmotor gemäß einem der Ansprüche 1 bis 5,
dadurch gekennzeichnet,
daß die Statorteile (1, 2) aus einem weichen magnetischen Sintermaterial bestehen.

8. Zweiphasenmotor als Schritt- oder Synchronmotor gemäß einem der Ansprüche 1 bis 7,
dadurch gekennzeichnet,
daß die Wicklungen (3, 4) aus einem direkt auf dem Mittelteil des Statorteils gespulten elektrischen Draht bestehen.

9. Zweiphasenmotor als Schritt- oder Synchronmotor gemäß einem der Ansprüche 1 bis 7,
dadurch gekennzeichnet,
daß die Wicklungen (3, 4) auf das Mittelteil (23, 24) jedes Statorteils (1, 2) umgebenden Isoliergehäusen aufgespult sind, wobei diese Gehäuse aus mehreren komplementären Teilen bestehen, welche eine Isoliermuffe bilden, wenn sie zusammengefügt sind.

10. Zweiphasenmotor als Schritt- oder Synchronmotor gemäß einem der Ansprüche 1 bis 9,
dadurch gekennzeichnet,
daß der Rotor (6) aus einer mit der Drehachse koaxial angeordneten, rohrförmigen Hülse besteht, welche Verbindungszonen zur Drehachse (18) aufweist, wobei die rohrförmige Hülse den rohrförmigen Magneten (7 bis 13) auf mindesten einem Bereich seiner Höhe stützt.

## Claims

1. A stepping two-phase or synchronous motor of a type including a first statoric portion which cooperates with two electrical coils, a second statoric portion (5) which allows magnetic flux path to be completed, and a rotor (6) provided with 2N thin magnets which are transversally magnetized in alternate directions so as to provide alternately positive and negative magnetic poles on each surface thereof, characterized in that said rotor (6) includes five pairs of poles, and in that said first statoric portion comprises two identical statoric pieces (1, 2) made from soft magnetic material and each provided with two statoric poles (19, 20) and (21, 22) connected by a middle portion (23, 24) surrounded with a coil (3, 4) of a length substantially equal to the width of said statoric portion (1, 2) opening, middle lines (25 to 28) of said statoric poles (19 to 22) being spaced apart by about 108°, said second statoric portion (5) being made from soft magnetic material which ensures magnetic flux to be completed.

2. The stepping two-phase or synchronous motor as recited in claim 1, characterized in that said rotor (6) comprises an annular radially magnetized magnet having ten tile-shape adjacent magnetized regions (7 to 13).

3. The stepping two-phase or synchronous motor as recited in claim 1 or 2, characterized in that said second statoric portion (5) is integral with said rotor (6).

4. The stepping two-phase or synchronous motor as recited in claim 1 or 2, characterized in that said second statoric portion (5) is fixed and comprises four regions (39 to 42) respectively corresponding to said four statoric poles (19 to 22), with said four regions (39 to 42) being pair-connected so as to ensure magnetic flux of each of said statoric pieces (1, 2) to be completed.

5. The stepping two-phase or synchronous motor as recited in any claims 1 to 4, characterized in that angular opening of both poles (19 to 22) median lines (25 to 28) of each of said statoric pieces (1, 2) is slightly above 108°.

6. The stepping two-phase or synchronous motor as recited in claims 1 to 5, characterized in that said statoric portions (1, 2) are obtained by stacking cut-out magnetic sheets.

7. The stepping two-phase or synchronous motor as recited in claims 1 to 5, characterized in that said statoric portions (1, 2) are made from sintered soft magnetic material.

8. The stepping two-phase or synchronous motor as recited in claims 1 to 7, characterized in that said windings (3, 4) include an electric wire which is wound directly on the middle portion of said statoric piece.

9. The stepping two-phase or synchronous motor as recited in claims 1 to 7, characterized in that said windings (3, 4) are wound on insulating frames which surround the middle portion (23, 24) of each of said statoric pieces (1, 2), said frames including several complementary portions, resulting in an insulating sleeve when assembled.

10. The stepping two-phase or synchronous motor as recited in claims 1 to 9, characterized in that said rotor comprises a tubular sleeve coaxial with rotating axis (18) thereof, provided with regions for connection with said rotating axle, said tubular sleeve supporting said tubular magnet (7 to 13) on at least a portion of the heigth thereof.
